# FASCICULE DE BREVET EUROPEEN

(11) **EP 1 264 747 B1**
(45) Date de publication et mention de la délivrance du brevet: **20.02.2008**
(21) Numéro de dépôt: 02370026.3
(22) Date de dépôt: 10.06.2002
(51) Int. Cl.: B60S 3/00

(54) **Installation pour le lavage et la désinfection controlés de véhicules de transport de marchandises polluantes**
Anlage zur kontrollierten Reinigung und Desinfektion von Fahrzeugen zum Transport umweltschädlicher Stoffe
Installation for controlled wash and disinfection of vehicles transporting polluting goods

(30) Priorité: 08.06.2001 FR 0107540
(43) Date de publication de la demande: 11.12.2002
(73) Titulaire: Regnier Lav'dose Systemes - R.L.S., 62170 Attin (FR)
(72) Inventeur: Regnier, Philippe, 62170 Aix en Issart (FR)
(74) Mandataire: Hennion, Jean-Claude

(56) Documents cités:
- US-A- 4 106 516
- US-A- 4 999 763

## Description

La présente invention concerne le domaine du lavage et de la désinfection. Elle concerne plus particulièrement une installation permettant de réaliser le lavage et la désinfection, de manière contrôlée, de véhicules de transport de marchandises polluantes, notamment des bétaillères venant de livrer leur marchandise dans des abattoirs.

Le transport d'animaux , notamment du bétail, génère dans le véhicule de transport des résidus qu'il convient d'éliminer , lesdits résidus étant constitués de paille, d'excréments et de pollutions diverses. Lorsque les animaux ont été déchargés , le véhicule de transport est dirigé vers une aire de lavage , généralement inclinée avec un puisard pour collecter les eaux usagées et éventuellement équipé de moyens pour recueillir la paille. L'opérateur, généralement le conducteur du véhicule, dispose de jets d'eau pour effectuer ce lavage.

Le demandeur a fait le constat qu'une telle opération de lavage est laissée au libre arbitre de l'opérateur sans qu'aucun contrôle ne puisse être fait à postériori. De plus il s'agit exclusivement d'une opération de lavage sans souci d'élimination des éventuels contaminants susceptibles d'être générés à l'occasion du transport des animaux.

Il en est de même pour des marchandises telles que des betteraves qui sont transportées du lieu de culture jusqu'à la sucrerie...avec un résidu terreux important qui reste dans le véhicule après déchargement. Il en est de même à chaque fois que les marchandises transportées peuvent provoquer une pollution du véhicule, pollution qu'il importe d'éliminer, sachant que ledit véhicule peut ensuite être amené à transporter d'autres marchandises qui risqueraient d'être contaminées par ladite pollution.

L'un des buts de la présente invention est de pallier à ces inconvénients.

Le document US-A 4 106 516 décrit une installation de lavage et désinfection de véhicules transportant marchandises polluantes dotée d'une borne technique, un jet d'eau et un moyen de pulvérisation d'un liquide désinfectant.

L'installation de la présente invention est une installation de lavage et également de désinfection, de manière contrôlée , de véhicules de transport de marchandises polluantes.

Une telle installation comporte :
a) au moins un moyen de lavage par jets d'eau haute ou basse pression,
b) un moyen de pulvérisation d'un liquide désinfectant,
   lesdits moyens de lavage et de pulvérisation étant équipés de débitmètres et de capteurs marche/arrêt,
c) une borne technique,
d) pour chaque véhicule, un élément individuel et personnalisé d'actionnement de la borne technique,
e) la borne technique étant reliée aux débitmètres et capteurs marche/arrêt et équipée de moyens de sélection d'une opération de lavage / désinfection, de moyens de contrôle, de moyens de comptage et de moyens d'impression en sorte d'obtenir l'édition d'une fiche personnalisée regroupant les informations relatives à ladite opération de lavage/désinfection, notamment le numéro du véhicule, la date et l'heure de l'opération, la quantité d'eau de lavage consommée et la quantité de liquide désinfectant consommée.

Ainsi grâce à l'installation de l'invention , il est possible d'obtenir une réelle traçabilité de toutes les opérations de lavage et de désinfection de tous les véhicules transportant les marchandises polluantes, notamment mais non exclusivement les bétaillères venant de décharger leur marchandise dans les abattoirs. Bien sûr le produit désinfectant et la concentration utilisée dans le liquide pulvérisé correspondent aux normes actuellement en vigueur ou mises en place pour limiter les risques de contamination, en particulier mais non exclusivement par l'intermédiaire du bétail ou plus généralement des animaux. La fiche personnalisée obtenue de la borne technique par l'opérateur , généralement le conducteur du véhicule, apporte de ce fait une certaine garantie du respect des règles de décontamination. Elle permet à postériori de justifier que le véhicule ayant déchargé lesdites marchandises à une date et une heure donnée a bien été lavé et décontaminé dans des conditions qui correspondent à celles imposées par l'installation pour un type d'opération de lavage et désinfection.

L'élément individuel et personnalisé , pour chaque véhicule, d'actionnement de la borne technique peut se présenter sous diverses formes, pour autant qu'il comporte les informations relatives au véhicule sous un mode qui soit lisible par la borne technique. Ce mode peut être du type microprocesseur, piste magnétique , code barre, etc..

Dans une variante préférée de réalisation, de manière à garantir encore plus le contrôle sanitaire des véhicules ayant subi une opération de lavage / désinfection , ladite installation comporte en outre des moyens de verrouillage de l'élément d'actionnement sur la borne technique, lesdits moyens étant en position active de verrouillage tant qu'une quantité minimale prédéterminée de liquide désinfectant n'a pas été consommée. Ainsi l'opérateur ne peut pas récupérer son élément individuel et personnalisé d'actionnement de la borne technique tant qu'il n'a pas mis en oeuvre pendant un temps suffisant le moyen de pulvérisation du liquide désinfectant.

Si l'élément individuel et personnalisé d'actionnement se présente sous la forme d'une clé, les moyens de verrouillage sont des moyens mécaniques réalisant le blocage en position, empêchant l'extraction de la clé.

Si l'élément individuel et personnalisé d'actionnement de la borne technique se présente sous la forme d'une carte, notamment carte à puce , les moyens de verrouillage n'assurent la libération de ladite carte puce et la restitution de celle-ci , hors de la borne technique, qu'après que la quantité minimale prédéterminée de liquide désinfectant a été consommée lors de l'opération.

Pour éviter tout comportement frauduleux de l'opérateur et pour garantir que le liquide désinfectant a bien été utilisé pour la désinfection du véhicule, de préférence l'installation peut comporter également des moyens de contrôle visuel de l'opération de désinfection. Ces moyens peuvent consister dans des moyens vidéo, aptes à enregistrer le poste de lavage du véhicule , par exemple une caméra placée dans l'aire de lavage et dont l'actionnement est déclenché par la mise en route de l'opération de désinfection. Ces moyens peuvent consister dans des moyens de traçage , contenus dans le liquide désinfectant, et dont la présence dans le véhicule peut être vérifiée visuellement. Ces deux moyens de contrôle visuel de l'opération de désinfection ne sont pas exclusifs l'un de l'autre, et peuvent être combinés.

L'ensemble des moyens constituant l'installation qui fait l'objet de la présente invention peuvent être rassemblés dans un même local technique, exception éventuellement faite des moyens permettant d'obtenir l'édition de la fiche personnalisée qui peuvent se trouver dans un autre site.

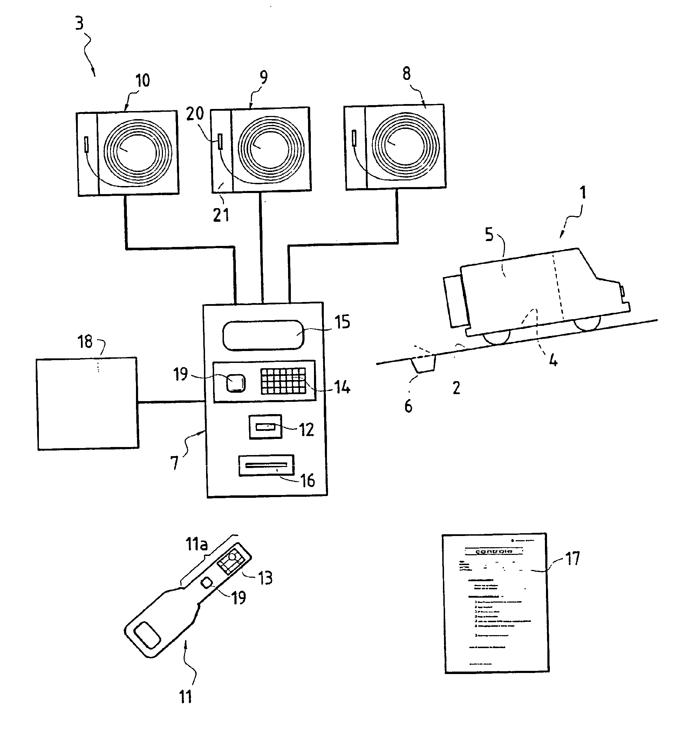

La présente invention sera mieux comprise à la lecture de la description qui va être faite d'un exemple d'installation pour le lavage et la désinfection contrôlée de bétaillères , illustré par le dessin annexé dans lequel la figure unique est une représentation schématique, sous forme de diagramme, des différents composants entrant dans la constitution de l'installation.

La présente invention concerne de manière privilégiée mais non exclusive le lavage et la désinfection des bétaillères 1 , qui sont des véhicules destinés au transport du bétail, c'est-à-dire des animaux d'élevage de ferme , élevés en troupeaux; ceci n'est pas exclusif de l'invention, l'installation revendiquée pourrait être utilisée pour le lavage et la désinfection de tout type de véhicule de transport d'animaux que ce soit de la volaille, des lapins, voire même des poissons et de tout type de véhicule de transport d'autres marchandises génératrices de pollution, par exemple betteraves, produits semi-finis notamment pulvérulents.

Lorsqu'il a déchargé le bétail à l'abattoir, le conducteur de la bétaillère procède au lavage de celle-ci sur l'aire 2 de lavage de l'installation 3. De manière classique , cette aire de lavage 2 est légèrement inclinée de manière à ce que l'eau de lavage puisse s'écouler d'une part sur le plancher 4 du compartiment 5 intérieur de la bétaillère 1 et d'autre part sur l'aire 2 proprement dite jusqu'à un puisard 6. Lors de ce lavage , l'opérateur doit évacuer du compartiment intérieur 5 tous les résidus qu'il contient, notamment la paille, les excréments des animaux et autres pollutions diverses.

L'installation 3 de l'invention comporte une borne technique 7 qui est reliée à deux dispositifs de lavage 8, 9 et à un dispositif de désinfection 10, chacun de ces dispositifs étant lui-même équipé d'un débitmètre et d'un capteur marche/arrêt qui sont connectés à la borne technique 7. Le premier dispositif de lavage 8 est du type à jets d'eau basse pression. Le second dispositif de lavage 9 est du type à jets d'eau haute pression. Le dispositif de désinfection 10 est un dispositif de pulvérisation d'un liquide désinfectant , contenant une quantité dosée d'un désinfectant normalisé apte à éliminer la contamination apportée ou générée par le transport des animaux.

La borne technique 7 est une borne éventuellement interactive permettant d'une part à l'opérateur de se servir des dispositifs de lavage 8, 9 et de désinfection 10 et d'autre part de collecter , de mémoriser et de retranscrire sous la forme d'une fiche les informations relatives à l'opération de lavage/désinfection réalisée.

L'actionnement de cette borne 7 nécessite un élément individuel et personnalisé , pour chaque véhicule, mis en oeuvre par l'opérateur. Dans l'exemple illustré , cet élément est une clé 11 , prévue pour être enfoncée dans une ouverture d'accès 12 prévue dans la borne technique 7. Lors de cet enfoncement, la partie distale 11a de ladite clé 11 se trouve à l'intérieur de la borne 7. Dans cette partie distale 11a se trouve une puce 13 dans laquelle sont mémorisées toutes les informations personnalisées en lien avec le véhicule 1. Il peut s'agir notamment du numéro d'immatriculation du véhicule, du nom de son propriétaire , du nom de son conducteur.

La borne technique 7 comporte bien sûr des moyens de lecture, de mémorisation et de traitement des informations contenues dans la puce 13, une fois réalisée l'introduction de la clé 11 dans l'ouverture d'accès 12.

La borne technique 7 comporte un clavier 14 dont les touches permettent à l'opérateur de sélectionner le type d'opération de lavage/désinfection qu'il veut mettre en oeuvre. En effet plusieurs types d'opérations peuvent être pré-programmées , notamment en fonction de la gamme de véhicules de transport, particulièrement du volume du compartiment intérieur 5 à nettoyer et désinfecter.

Le type d'opération de lavage/désinfection va conditionner la quantité d'eau de lavage ou de liquide désinfectant qui sera alimentée par les dispositifs 8, 9 et 10 précités.

La borne technique comporte éventuellement une visu 15 permettant un certain dialogue avec l'opérateur, destinée à réaliser le bon fonctionnement de l'installation, par exemple en donnant à l'opérateur les instructions successives d'introduction de la clé, dans le bon sens , d'appui sur les touches du clavier en fonction du type de marchandises transportées, du cubage du véhicule.

La borne technique 7 comporte également une fente 16 par laquelle peut être extraite par l'opérateur la fiche signalétique 17 qui regroupe toutes les informations personnalisées relatives à l'opération de lavage/désinfection réalisée.

La borne technique 7 peut de préférence être reliée à un ordinateur central 18 faisant partie d'un centre de gestion, lui-même connecté à un clavier, une visu et une imprimante. C'est au niveau de cet ordinateur central 18 que peuvent être rentrées en mémoire les données personnalisées correspondant à chaque véhicule 1, données que l'on retrouve en tout ou partie sur la puce 13 de la clé 11.

Le fonctionnement de l'installation se déroule de la manière suivante. Lorsqu'il a stationné son véhicule 1 sur l'aire de lavage 2, l'opérateur introduit sa clé 11 dans l'ouverture d'accès 12 de la borne technique 7. Les informations contenues dans la puce 13 sont lues et comparées à celles gardées en mémoire dans l'ordinateur central 18. Le but de cette comparaison est de vérifier que le véhicule 1 fait bien partie du parc de véhicules agréés par l'abattoir. L'introduction de la clé 11 dans la borne technique soit mécaniquement à l'aide d'un contacteur soit électroniquement , suite à la comparaison précitée , alimente le clavier 14 dont les touches vont permettre la mise en route de l'un et/ou l'autre des dispositifs de lavage 8, 9 et de désinfection 10. Par exemple si l'opérateur appuie sur la touche 19 du clavier 14, cela déclenche la mise en route du dispositif de lavage basse pression 9 et du dispositif de désinfection 10. En retirant la poignée 20 du dispositif de lavage basse pression 9 de son logement 21, I' opérateur déclenche la mise en route de la pompe d'alimentation dudit dispositif 9. L'opérateur peut alors effectuer le lavage à grande eau du compartiment intérieur 5 de la bétaillère 1 , en actionnant la poignée 20. L'alimentation en eau est dûment contrôlée par le débitmètre dont est équipé le dispositif 9. La remise en place de la poignée 20 dans son logement 21 déclenche l'arrêt de la comptabilisation du débitmètre et l'enregistrement en mémoire de la quantité d'eau consommée par le dispositif de lavage basse pression 9.

Après le lavage proprement dit , l'opérateur réalise la désinfection en mettant en oeuvre la pulvérisation du liquide désinfectant grâce au dispositif de désinfection 10. Le déclenchement du débitmètre et le comptage de la quantité de liquide consommée sont réalisés de la même manière que précédemment. Eventuellement selon un autre type d'opérations de lavage/désinfection, l'opérateur pourra effectuer d'une part un lavage à grande eau du dispositif basse pression 9 puis un nettoyage grâce au dispositif de lavage haute pression 8 , le tout étant bien entendu suivi de la désinfection grâce au dispositif correspondant 10.

Une fois cette opération lavage/désinfection réalisée, toutes les données relatives à cette opération y compris celles provenant de la clé 11 et déjà mémorisées sont enregistrées, traitées et imprimées sur une fiche 20 qui sort par la fente 16 et dont l'opérateur peut se saisir. Cette fiche constitue la trace écrite de la réalisation de cette opération.

Indépendamment de cette trace écrite , toutes les données sont elles-mêmes stockées en mémoire dans l'ordinateur 18 de sorte que le service de gestion de l'abattoir peut y avoir un accès direct.

De manière à être sûr que l'opérateur effectue bien l'opération de désinfection en mettant en oeuvre le dispositif 10 , l'installation 3 comporte également un système de verrouillage de la clé 11 empêchant le retrait de ladite clé de l'ouverture d'accès 12 tant que la quantité adéquate de liquide désinfectant n'a pas été consommée au niveau du dispositif 10.

Selon un exemple de réalisation, la clé 11 est pourvue d'un trou débouchant 19 dans la partie distale 11a de la clé 11, c'est-à-dire celle qui se trouve à l'intérieur de la borne technique 7 lorsque la clé 11 est en position active. Dans ce cas , le système de verrouillage comprend un doigt qui pénètre automatiquement à l'intérieur du trou débouchant 19 lors de I' introduction de la clé 11 dans l'orifice d'accès 12. Ce doigt n'est escamoté du trou débouchant 19 qu'après que le comptage du volume de liquide désinfectant , grâce au débitmètre correspondant , a atteint un seuil prédéterminé, considéré comme adéquat pour l'opération de lavage/désinfection souhaitée. Ce seuil peut être variable en fonction du type de marchandises transportées et du cubage du véhicule.

La présente invention n'est pas limitée à l'exemple de réalisation qui vient d'être décrit à titre non exhaustif. En particulier il est possible de mettre en oeuvre d'autres éléments individuels et personnalisés qu'une clé , par exemple une carte du type carte bancaire . Le support d'informations personnalisées lié à cet élément peut être une piste magnétique , un code barre ou tout moyen permettant que les informations ainsi supportées puissent être lisibles par les moyens correspondants de la borne technique 7.

Par ailleurs, le choix du désinfectant, sa concentration dans le liquide à pulvériser, la quantité minimale de liquide désinfectant par opération de lavage/désinfection sont des paramètres qu'il convient d'adapter en fonction du type de pollution engendrée par les marchandises transportées.

## Revendications

1. Installation de lavage et de désinfection, de manière contrôlée, de véhicules de transport de marchandises polluantes, **caractérisée en ce qu'**elle comporte :
a) au moins un moyen de lavage par jets d'eau haute ou basse pression (8,9),
b) un moyen de pulvérisation (10) d'un liquide désinfectant,
lesdits moyens de lavage et de pulvérisation étant équipés de débitmètres et de capteurs marche/arrêt,
c)une borne technique (7),
d)pour chaque véhicule (1), un élément individuel et personnalisé d'actionnement (11) de la borne technique (7),
la borne technique (7) étant reliée aux débitmètres et capteurs marche/arrêt et équipée de moyens de sélection d'une opération de lavage/désinfection, de moyens de contrôle, de moyens de comptage et de moyens d'impression en sorte d'obtenir l'édition d'une fiche personnalisée (17) regroupant les informations relatives à ladite opération de lavage/désinfection, notamment le numéro du véhicule , la date et I 'heure de l'opération, la quantité d'eau de lavage consommée et la quantité de liquide désinfectant consommée.

2. Installation selon la revendication 1, **caractérisée en ce qu**'elle comporte en outre des moyens de verrouillage de l'élément d'actionnement sur la borne technique, lesdits moyens étant en position active de verrouillage tant qu'une quantité minimale prédéterminée de liquide désinfectant n'a pas été consommée.

3. lnstallation selon la revendication 2, **caractérisée en ce que** l'élément individuel et personnalisé d'actionnement se présentant sous la forme d'une clé, les moyens de verrouillage sont des moyens mécaniques réalisant le blocage en position, empêchant l'extraction de la clé.

4. Installation selon la revendication 3, **caractérisée en ce que** la clé (11) comporte un trou débouchant (19), dans sa partie distale (11a) qui pénètre dans la borne (7) et **en ce que** les moyens mécaniques de blocage consistent en un doigt escamotable pénétrant dans le trou débouchant (19) en position active de verrouillage.

5. Installation selon la revendication 2, **caractérisée en ce que** l'élément individuel et personnalisé d'actionnement de la borne technique se présentant sous la forme d'une carte, notamment carte à puce , les moyens de verrouillage n'assurent la libération de ladite carte à puce et la restitution de celle-ci , hors de la borne technique (7), qu'après que la quantité minimale prédéterminée de liquide désinfectant a été consommée lors de l'opération.

6. Installation selon l'une des revendications 1 à 5 **caractérisée en ce qu**'elle comporte également des moyens de contrôle visuel de l'utilisation du liquide désinfectant.

7. lnstallation selon la revendication 6 **caractérisée en ce que** les moyens de contrôle visuel de l'utilisation du liquide désinfectant sont des moyens vidéo d'enregistrement , dont l'actionnement est de préférence déclenché par la mise en route de l'opération de désinfection.

8. installation selon l'une des revendications 6 et 7 **caractérisée en ce que** les moyens de contrôle visuel de l'utilisation du liquide désinfectant sont des moyens de traçage contenus dans le liquide désinfectant.

## Claims

1. An installation for the washing and disinfecting, in a controlled manner, of vehicles for the transportation of polluting merchandise, **characterised in that** it includes:
a) at least a means of washing by high or low pressure water jets (8, 9),
b) a means of spraying (10) a disinfecting liquid, with the said means of washing and spraying being equipped with flowmeters and on/off sensors,
c) a control terminal (7),
d) for each vehicle (1), an individual and personalised element (11) for actuation of the control terminal (7),
the control terminal (7) being connected to the flowmeters and on/off sensors, and equipped with means for the selection of a washing/disinfecting operation, with control means, with metering means and with printing means so as to achieve the printing of a personalised sheet (17) containing all of the information relating to the said washing/disinfecting operation, in particular the vehicle number, the date and time of the operation, the quantity of washing water consumed, and the quantity of disinfecting liquid consumed.

2. The installation according to claim 1, **characterised in that** it also includes means for locking the actuating element on the control terminal, the said means being in the active locking position for as long as a predetermined minimum quantity of disinfecting liquid has not been consumed.

3. The installation according to claim 2, **characterised in that** the individual and personalised actuating element comes in the form of a key, and the locking means are mechanical means effecting the locking in position, and so preventing the extraction of the key.

4. The installation according to claim 3, **characterised in that** the key (11) includes a through hole (19) in its distal part (11a) which enters into the terminal (7), and **in that** the mechanical locking means consist of a retractable finger that enters into the through hole (19) in the active locking position.

5. The installation according to claim 2, **characterised in that** the individual and personalised element for actuating the control terminal comes in the form of a card, in particular a chip card, with the locking means effecting the release of the said chip card and the restoration of the latter, outside of the control terminal (7), only after the predetermined minimum quantity of disinfecting liquid has been consumed during the operation.

6. The installation according to one of claims 1 to 5, **characterised in that** it also includes control means to monitor the use of the disinfecting liquid.

7. The installation according to claim 6, **characterised in that** the control means employed to monitor the use of the disinfecting liquid are video recording means, whose actuation is preferably triggered by the start-up of the disinfecting operation.

8. The installation according to one of claims 6 and 7, **characterised in that** the control means employed to monitor the use of the disinfecting liquid are tracing means contained in the disinfecting liquid.

## Patentansprüche

1. Anlage zum kontrollierten Waschen und Desinfizieren von Fahrzeugen für den Transport umweltschädlicher Stoffe, **dadurch gekennzeichnet, daß** sie aufweist:
a) mindestens ein Mittel zum Waschen mit Hoch- oder Niederdruckwasserstrahl (8, 9),
b) ein Sprühmittel (10) für eine Desinfektionsflüssigkeit,
wobei die Waschmittel und Sprühmittel mit Durchflußmessern und Ein-/Aus-Sensoren ausgestattet sind,
c) eine technische Säule (7),
d) für jedes Fahrzeug (1) ein individuelles und persönlich gestaltetes Betätigungselement (11) der technischen Säule (7),
wobei die technische Säule (7) mit Durchflußmessern und Ein-/Aus-Sensoren verbunden ist und mit Mitteln zum Auswählen eines Wasch-/Desinfektionsvorgangs, mit Steuermitteln, Zählmitteln und Mitteln zum Ausdrucken ausgestattet ist, um das Herausgeben eines persönlich gestalteten Datenblatts (17) zu erzielen, das die Informationen im Zusammenhang mit dem Wasch-/Desinfektionsvorgang zusammenfaßt, insbesondere die Fahrzeugnummer, das Datum und die Uhrzeit des Vorgangs, die verbrauchte Waschwassermenge und die verbrauchte Desinfektionsflüssigkeitsmenge.

2. Anlage nach Anspruch 1, **dadurch gekennzeichnet, daß** sie ferner Mittel zum Verriegeln des Betätigungselements auf der technischen Säule aufweist, wobei die Mittel in aktiver Verriegelungsposition sind, solange nicht eine vorbestimmte Mindestmenge an Desinfektionsmittel verbraucht wurde.

3. Anlage nach Anspruch 2, **dadurch gekennzeichnet, daß** das individuelle und persönlich gestaltete Betätigungselement die Form eines Schlüssels hat, wobei die Verriegelungsmittel mechanische Mittel sind, die ein Blockieren in Position ausführen, das das Herausziehen des Schlüssels verhindert.

4. Anlage nach Anspruch 3, **dadurch gekennzeichnet, daß** der Schlüssel (11) ein durchgehendes Loch (19) in seinem distalen Teil (11 a) aufweist, der in die Säule (7) eindringt, und daß die mechanischen Blockiermittel aus einem einziehbaren Finger bestehen, der in das durchgehende Loch (19) in aktiver Verriegelungsposition eindringt.

5. Anlage nach Anspruch 2, **dadurch gekennzeichnet, daß** das individuelle und persönlich gestaltete Betätigungsmittel der technischen Säule die Form einer Karte aufweist, insbesondere einer Chipkarte, daß die Verriegelungsmittel das Freigeben der Chipkarte und ihre Zurückgabe aus der technischen Säule (7) erst sicherstellen, nachdem die vorbestimmte Mindestmenge an Desinfektionsmittelflüssigkeit bei dem Vorgang aufgebraucht wurde.

6. Anlage nach einem der Ansprüche 1 bis 5, **dadurch gekennzeichnet, daß** sie auch Mittel zur Sichtprüfung des Gebrauchs des Desinfektionsmittels aufweist.

7. Anlage nach Anspruch 6, **dadurch gekennzeichnet, daß** die Mittel zur Sichtprüfung des Gebrauchs der Desinfektionsflüssigkeit Videoaufzeichnungsmittel sind, deren Betätigen vorzugsweise durch das Ingangsetzen des Desinfektionsvorgangs ausgelöst wird.

8. Anlage nach einem der Ansprüche 6 und 7, **dadurch gekennzeichnet, daß** die Mittel zur Sichtprüfung des Gebrauchs der Desinfektionsflüssigkeit Markierungsmittel sind, die in der Desinfektionsflüssigkeit enthalten sind.
